# EUROPEAN PATENT APPLICATION

(11) **EP 2 375 743 A2**
(43) Date of publication of application: **12.10.2011**
(21) Application number: 10767250.3
(22) Date of filing: 19.04.2010
(51) Int. Cl.: H04N 7/18

(54) **LIGHTING APPARATUS AND LIGHTING CONTROL METHOD FOR A CLOSED-CIRCUIT TELEVISION CAMERA, AND LIGHTING CONTROL SYSTEM INTERLOCKED WITH THE CLOSED-CIRCUIT TELEVISION CAMERA**

(30) Priority: 21.04.2009 KR 20090034659; 08.01.2010 KR 20100001626
(71) Applicant: Ammon Teck Co., Ltd., Seo-gu Daejeon 302-210 (KR)
(72) Inventor: Jeon, Dug Goan, 302-725 Daejeon (KR)
(74) Representative: Carvajal y Urquijo, Isabel
(86) International application number: PCT/KR2010/002420
(87) International publication number: WO 2010/123236

(57) **Abstract**

The present invention relates to a lighting apparatus and to a lighting control method for a closed circuit television camera, which turn on LEDs in accordance with the exposure time of an imaging element in the closed-circuit television camera, and to a lighting control system interlocked with the closed circuit television camera, which turns on a plurality of lights in connection with a closed-circuit television system. For this purpose, the present invention comprises: a lamp module (120) consisting of lamps; a lamp module driver (121)which supplies power in a pulsed signal form to the lamp module (120); a synchronous signal extraction unit (130) which senses the video signal output by a camera (11) to extract a synchronous signal; and a microcomputer (110) which generates, on the basis of the synchronous signal extracted by the sychronous signal extraction unit (130), a turn-on signal in which pulses corresponding to the shutter exposure time of the imaging element of the camera are repeated using a shutter delay time as a gap, and which drives the lamp module driver(121) in accordance with the generated turn-on signal to turn on the lamp module (120) in the pulse period corresponding to the shutter exposure time.

## Description

### Technical Field

The present invention relates to a lighting apparatus and to a lighting control method for a closed-circuit television camera, which turns on lights in accordance with the exposure time of an imaging element in the closed-circuit television camera, and to a lighting control system interlocked with the closed-circuit television camera, which turns on a plurality of lights in connection with a closed circuit television system.

### Background Art

Generally for the purposes of monitoring or security, the closed-circuit television (CCTV) system is configured to transmit images of the surveillance area captured by the camera to the Digital Video Recorder (DVR) through transmission lines of a predetermined length, to record transmitted images and/or to output transmitted images on the monitor. The system is applied to various systems, such as the illegal parking enforcement system, parking management system, road traffic monitoring system, water level of a river monitoring system, etc.

Meanwhile, as a lighting device which lights a monitoring area when the area is determined to be dark according to the brightness, recently a light emitted diode (LED) is used because of low-power consumption, longer lifetime and the maintaining efficiency. Xenon flash lamp is also used to light with a high brightness. For this LED can be a visible LED or an infrared LED.

In such a closed-circuit television system, a camera periodically opens and closes the shutter, receives the lights in the imaging element when the shutter is open, and acquires the electrical signals corresponding to images by scanning charges stored in the imaging element when shutter is closed.

Therefore, in use a camera the captured image is same even if lights light the monitoring are only when shutter is open. So if the turn-on period of the lighting apparatus is synchronized with the open period of the shutter, it is advantageous to reduce the power consumption on a lighting apparatus and to extend the life time of a lighting apparatus for the reduced heat thereby.

For this as a prior art, there is a published patent KR 10-1993-0701801 A; 'SURVEILLANCE APPARATUS PARTICULARLY FOR USE IN VIEWING VEHICLE NUMBER-PLATES'. Since the said prior art is configured to operate the lights and the camera simultaneously while the camera was capturing images of vehicle number-plates, it could reduce the power consumption even though it captures clear images by using the infrared of high-peak pulse.

However, the said prior art is limited for capturing still images and does not disclose a light controlling technique for capturing moving images requested in a closed-circuit television system.

As a prior art applied for capturing moving images, there is a published patent KR 10-2006-0127680 A; 'MONITORING CAMERA HAVING INFRARED LASER ILLUMINATOR'. To synchronize the emitting period of diode with movements of camera shutter, the said prior art is configured to operate the camera shutter with the clock extracted by detecting the reflected lights when the periodical emitting lights of diode is reflected from the monitoring area.

However, the said prior art should be installed a continually operating type m-PD (Photo Diode) to detect the lights and has a difficulty in obtaining the accurate clock signal because of measurement errors occurred in m-PD itself and errors in process of clock extracting. In addition, it is difficult to synchronize the clock signal with the turn-on period for the delay time lapsed in process of extracting clock signal, and particularly if the open period of the camera shutter is to be synchronized according to the turn-on period of diode, it could not be captured the images with the requested quality because the open period of shutter should be determined for capturing images.

While a plurality of lights are installed in the monitoring area with camera, both of the prior arts are limited on the configuration which does not control simultaneously a plurality lights connected a camera.

### Disclosure

### Technical Problem

Accordingly, the object of the present invention is to provide a lighting apparatus and a lighting control method for a closed-circuit television camera, where the lighting apparatus can be installed easily on a closed-circuit television system and can make the lighting signal turn on/off exactly in accordance with the movement of a camera shutter.

Another object of the present invention is to provide a lighting control system interlocked with the' closed-circuit television camera, which is allowed to control a plurality of lights installed in the monitoring area to turn on periodically with the synchronization of a camera shutter and to exactly interlock the turn-on period in accordance with the synchronous signal of camera.

Another object of the present invention is to provide a lighting control system interlocked with the closed-circuit television camera, which is allowed to interlock the period through an automatic settlement even if the turn-on time of a light and the open time of camera shutter are not matched on initial driving.

### Technical solution

For attaining the above objects, the present invention, which relates to a lighting apparatus for a closed-circuit television camera, is characterized by comprising; a lamp module (120) consisting of lamps; a lamp module driver (121) which supplies power in a pulsed signal form to the lamp module (120); a synchronous signal extraction unit (130) which senses the video signal output by a camera (11) to extract a synchronous signal; and a microcomputer (110) which generates, on the basis of the synchronous signal extracted by the said synchronous signal extraction unit(130), a turn-on signal in which pulses corresponding to the shutter exposure time of the imaging element of the camera are repeated using a shutter delay time as a gap, and which drives the said lamp module driver (121) in accordance with the generated turn-on signal to turn on the said lamp module (120) in the pulse period corresponding to the shutter exposure time.

In addition, the present invention, which relates to a lighting control method for a closed-circuit television camera, is characterized by comprising; a synchronous signal extraction step (S10) to extract a synchronous signal from the video signal output by a camera (11); a shutter exposure time obtaining step (S20) to obtain a shutter exposure time from the camera imaging element on the basis of the extracted synchronous signal; a turn-on signal generating step (S30) to generate a turn-on signal in which pulses corresponding to the shutter exposure time are repeated using a shutter delay time as a gap; LED turn on/off step (S40) to drive the lamp module driver (121) in accordance with the generated turn-on signal and to turn on the lamp module (120) in the pulse period corresponding to the shutter exposure time.

Furthermore, the present invention, which relates to a lighting control system interlocked with the closed-circuit television camera, where the system is installed in connection with a closed-circuit television system (10) comprising camera (11) and monitor (12), controls the lamp module (310) of a plurality of lights (300) installed in the image area of the camera, and is characterized by comprising; the light control unit (320), which is installed on each light (300), including lamp module driver (321) to turn on the lamp module (310) in accordance with the turn-on signal transmitted from the main control unit (200); the local area communication module (322) to communicate with the main control unit (200); the main control unit (200) which includes the synchronous signal extraction unit (230) to extract a synchronous signal from video signal transmitted from a camera (11), the local area communication module (220) to communicate with the local area communication module (322), and a microcomputer (210) which generates on the basis of the synchronous signal extracted a turn-on signal in which pulses corresponding to the shutter exposure time are repeated using a shutter delay time as a gap, and which transmits the generated turn-on signal to the said light control unit (320) to turn on the lamp module (310) in pulse period corresponding to the shutter exposure time.

### Advantageous Effects

As described above the present invention is advantageous to exactly synchronize the turn-on period with the open period of the shutter because the turn-on signal is generated on the basis of the synchronous signal output by video signal and to adjust the pulse width of the turn-on signal corresponding to the turn-on period.

Further the present invention is advantageous to save the power of lights (300) which light the image area of camera, because a plurality of lights (300) installed on the area of image with camera can be synchronized with the movement of the camera shutter by local area communication.

Furthermore the present invention is advantageous to control for adjusting the turn-on time of a light and the open time of camera shutter by sensing the image sensitivity acquired in the sensitivity information acquisition unit (131) even if the turn-on time of lights and the open time of the camera shutter are not matched on initial driving.

### Brief Description of the Drawings

FIG. 1 is the block diagram of the lighting apparatus for a closed-circuit television according to the exemplary embodiment of the present invention;
FIG. 2 is a drawing showing the video synchronous signal and the turn-on signal in the lighting apparatus for a closed-circuit television according to the exemplary embodiment of the present invention;
FIG. 3 is the lighting control method for a closed-circuit television according to the exemplary embodiment of the present invention;
FIG. 4 is the block diagram of lighting control system interlocked with the closed-circuit television camera according to the exemplary embodiment of the present invention;
FIG. 5 is the drawing of the signal waveform to illustrate the turn-on signal (b) adjusted with the synchronous signal (a) and the turn-on signal before being adjusted with the synchronous signal (a) in lighting control system interlocked with the closed-circuit television camera according to the exemplary embodiment of the present invention;
FIG. 6 is the example drawing of a lighting control system interlocked with the closed-circuit television camera according to the exemplary embodiment of the present invention installed on the four channel closed-circuit television system.

### <The description of reference number>

10: Closed-circuit television system 11: Camera 12: Monitor
100: Lighting apparatus 110: Microcomputer 111: Turn-on signal generating means
112: Night or day determination means 120: Lamp module 121: Lamp module driver
130: Synchronous signal extraction unit 140: Optical sensor 141: A/D converting unit
200: Main control unit 210: Microcomputer 220: Local area communication module
230: Synchronous signal extraction unit 231: Sensitivity information acquisition unit 240: A/D converting unit
300: Light 310: Lamp module 320: Light control unit
321: Lamp module driver 322: Local area communication module 400: Optical sensor

### Best Mode for Invention

Hereinafter, the embodiments of the present invention will be described with reference to accompanying drawings so as to be easily understood by a person ordinary skilled in the art. And in below description of the present invention the detailed explanation is omitted in case the specific description related to the publicly known function or the publicly configuration makes unclear the gist of the present invention unnecessarily.

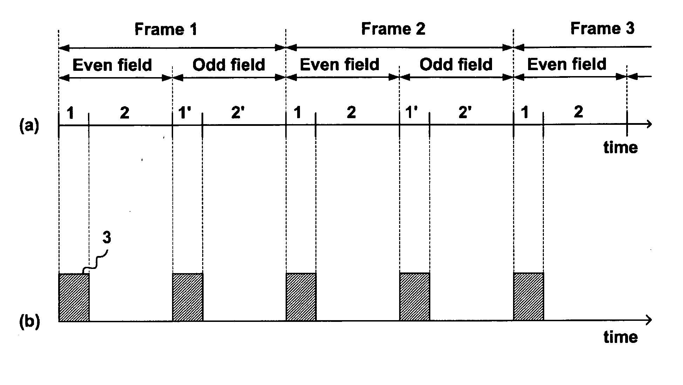

FIG. 1 is the block diagram of the lighting apparatus (100) for a closed-circuit television according to the exemplary embodiment of the present invention

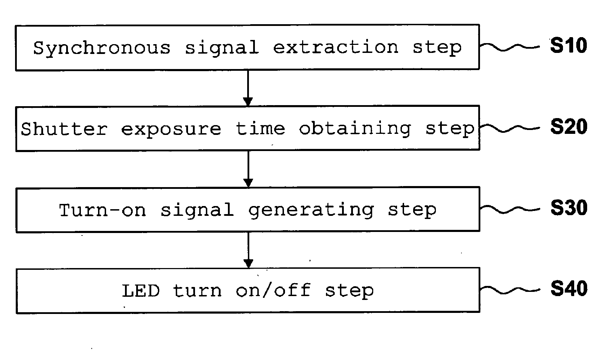

FIG. 2 is a drawing showing the video synchronous signal and turn-on signal in the lighting apparatus (100) for a closed-circuit television according to the exemplary embodiment of the present invention;

The invention is a lighting apparatus for the camera (11) of a closed-circuit television system (10) and it turns on and off in connection with the camera.

Since the said closed-circuit television system (10) is the publicly known technology comprising the camera (11) and monitor (12), it is described within the scope of understanding the embodiment of the present invention.

The said camera (11) converts the lights received through lens to the video signals of the electric signals by using the imaging element, and transmits them to the monitor (12) where the imaging element is composed of CCD (charge couple device) module or CMOS (complementary metal oxide semi-conductor) module, and controls the quantity of lights coming into the imaging element through the electrical shutter or the mechanical shutter.

At this time single frame of the image captured, as shown in above Fig 2 (a), consists of even field frame and odd field frame. To obtain the even field frame and odd field frame, it needs to open and close the shutter respectively. In shutter exposure time (1, 1') when the imaging element is exposed according to the opened shutter, the imaging element stores the charge from lights received and in shutter delay time (2, 2') when the imaging element waits from the close time of shutter to the next open time of shutter, the imaging element scans the charge stored and generates the video signal. Therefore in the process of getting one frame image, the light is received in two times or shutter exposure times (1, 1'). In general, each of shutter exposure times (1, 1') is 0.61ms and each of shutter delay times (2, 2') is 15.99ms. And this shutter exposure times (1, 1') and shutter delay times (2, 2') can be obtained from the synchronous signal (vertical line sync signal) of the video signal.

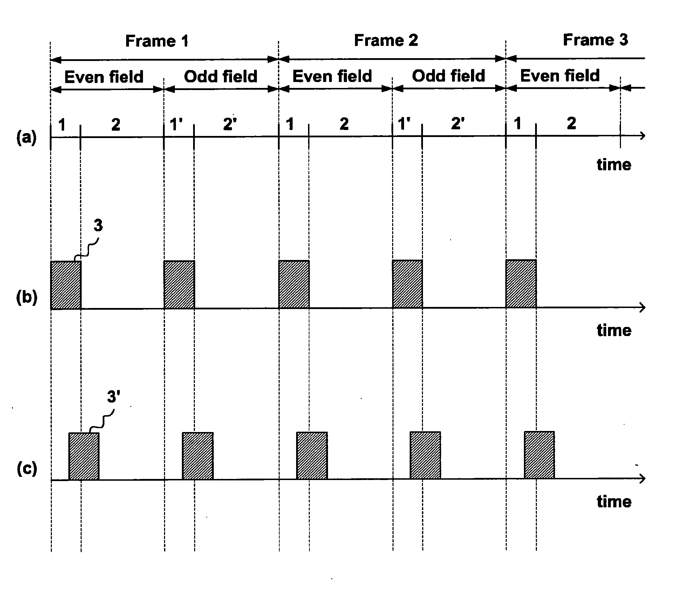

The said monitor (12) outputs the image captured by the said camera (11) and the closed-circuit television system (10) can be comprised of more a divider or a Digital Video Recorder (DVR), even not shown in Fig. 4.

The lighting apparatus for a closed-circuit television camera according to the exemplary embodiment of the present invention is installed on the camera to connect through the signal or installed next to the camera, and is comprising the lamp module (120), lamp module' driver (121), synchronous signal extraction unit (130), optical sensor (140), A/D converting unit (141) and Microcomputer (110).

The said lamp module (120), which can be turned on by the electricity supplied from the lamp module driver (121) as described below, is generally composed of LED module using for a camera or can be composed of the xenon flash lamp (Xe flash lamp) using for a high brightness recently.

The said lamp module driver (121) turns on the said lamp module (120) only in the pulse period which has a controlled width by supplying the power to the said lamp module (120) as a repeating signal with a time gap. Even the power supply unit is not shown in Fig. 1, the lighting apparatus includes the power supply unit (not shown) which can convert the electricity supplied from outside for the lamp module driver (121).

The said synchronous signal extraction unit (130) senses the video signal in the signal wire connecting the camera and the monitor and extracts the synchronous signal from the video signal sensed. Herein the extracted synchronous signal is the signal from which the microcomputer (110) described below can calculate the shutter exposure time to open the shutter and to expose the imaging element to lights. In the embodiment of the present invention, the vertical line sync signal (V_SYNC) is extracted as a synchronous signal and the microcomputer described below can calculate the shutter exposure time and shutter close time from extracted synchronous signal and thereafter can calculate the exposure time of the imaging element. On the other hand, the said synchronous signal, can be the signal for shutter movement and at that time from the signal of shutter movement the microcomputer (110) generates the turn-on signal having the pulse matched the shutter opening.

The said optical sensor (140), a configuration to restrict turn-on of the lamp module (120) according to the brightness of the area, senses the brightness of the image area where a camera is installed. Namely, the said optical sensor (140) is a configuration in order to turn off the lamp module (120) if the area is enough bright to capture the image with a camera. This kind of the said optical sensor (140) can be composed of the silicon photo cell or the CDS photo cell.

The said A/D converting unit (141) converts the illuminant signal sensed by the said optical sensor (140) to the digital signal and then inputs to the microcomputer (110).

The said microcomputer (110) is comprising; turn-on signal generating means (111) which generates, on the basis of the synchronous signal transmitted from the synchronous signal extraction unit(130), a turn-on signal in which pulses corresponding to the shutter exposure time are repeated using a shutter delay time as a gap; night or day determination means (112) which compares the illuminant signal transmitted from the said A/D converting unit (141) with the preset illuminant signal and determines whether the value of the illuminant signal transmitted exceeds the value of the preset illuminant signal or not. The said microcomputer (110) transmits the turn-on signal generated at the turn-on signal generating means to the lamp module driver (121) to turn on the lamp module (120) in pulse period corresponding to the shutter exposure time and controls the said lamp module driver (121) to turn off the lamp module (120) according to the determination of the said night or day determination means (112) when the value of the illuminant signal transmitted exceeds that of the preset illuminant signal.

Herein, the said turn-on signal generation means (111), if the said synchronous signal extraction unit (130) is to extract vertical line sync signal (V-SYNC), is composed to set the exposure time based on the vertical line sync signal (V-SYNC) and to generate the turn-on signal where the pulse (3) of the pre-fixed width is produced in the exposure time. On the other hand, the said turn-on signal generation means (111), if the said synchronous signal extraction unit (130) is to extract the shutter movement signal, is composed to generate the turn-on signal where the pulse (3) is produced only in the exposure time of the shutter movement signal.

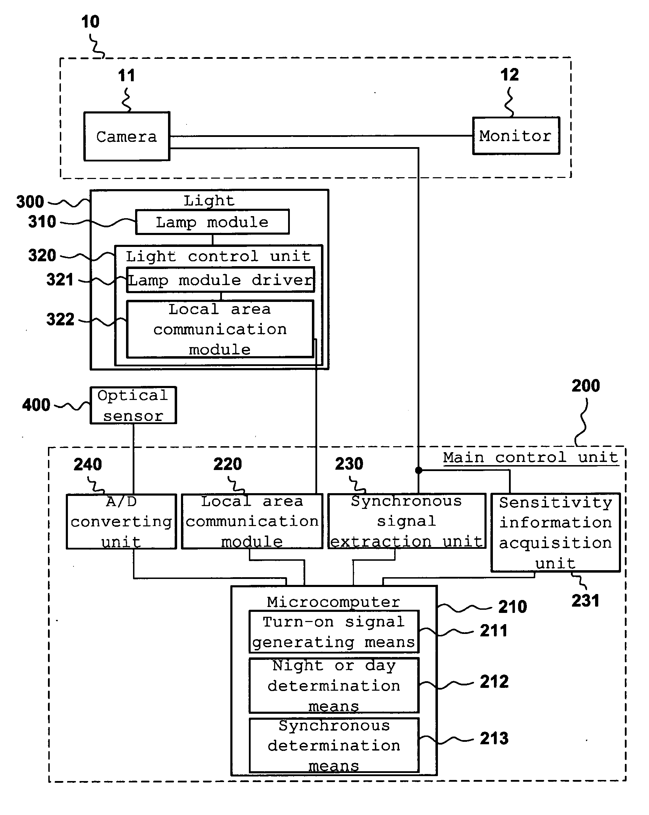

Fig. 3 is the lighting control method for a closed-circuit television composed of the configuration in the said Fig 1.

Firstly, in the state where the lighting apparatus (100) for a camera is installed as shown in Fig 1, the microcomputer (110) make the synchronous extraction unit (130) extract the synchronous signal from the video signal transmitted from the camera (11) to the monitor (12) (S10).

Next, the microcomputer (110) extracts the shutter exposure time (1, 1') of the imaging element of the camera based on the synchronous signal extracted (S20).

Next, the microcomputer (110) generates the turn-on signal in which pulses (3) corresponding to the shutter exposure time (1, 1') are repeated using a shutter delay time as a gap (S30), and transmits the generated turn-on signal to lamp module driver (121) to supply the power to the lamp module (120) in accordance with the turn-on signal (S40). As a result, the form of electricity supplying to lamp module (120) becomes the pulse form which supplies the electricity only in the shutter exposure time as shown in Fig 2 (b).

Meanwhile, the microcomputer (110) in the processing the step (S40) in which the turn-on signal is transmitted to the lamp module driver (121), if the value of the illuminant signal sensed at the optical sensor (140) and the A/D converting unit (141) exceeds the value of the preset illuminant signal, intermits the transmission of turn-on signal and controls the said lamp module driver (121) not to supply the electricity to lamp module (120).

Fig. 4 is the block diagram of lighting control system interlocked with the closed-circuit television camera according to the exemplary embodiment of the present invention.

According to Fig. 4, a lighting control system interlocked with the closed-circuit television camera according to the exemplary embodiment of the present invention turns on the light (300) of the area, where a camera is installed, in connection with the movement of the camera shutter.

Herein, the said light (300) can be made of an LED or a xenon flash lamp (Xe flash lamp). For this the LED can be a visible LED or an infrared LED.

A lighting control system interlocked with the closed-circuit television camera according to the exemplary embodiment of the present invention is comprised of the light control unit (320), the optical sensor (400) and the main control unit (200).

The said light control unit (320), which is respectively attached on a plurality of the light (300) installed in the image area of the camera, turns on the lamp module (310) of the light (300) periodically in accordance with the open of the camera shutter and is comprising; the lamp module driver (321) which supplies the electricity to the lamp module (310) with controlling the electricity supplied from outside according to the turn-on signal transmitted from the main control unit (200); and the local area communication module (322) received the turn-on signal through the local area communication with the main control unit (200).

That is, the said light control unit (320), which receives the turn-on signal of pulse form corresponding to the shutter exposure time from the main control unit described below, turns on the lamp module (310) only in equivalent time to the pulse width of turn-on signal.

The said local area communication module (322), a configuration to locally communicate with the main control unit (200), can be composed using the wired communication method connecting through communication wire or using one of the local wireless communication methods such as a ZigBee communication, Bluetooth communication and UWB communication. The present invention is not limited thereto and can be using one of the various local communication methods.

Herein, the said lamp module (310) is a package manufactured with one or more lamp and the said light (300), even this is not shown, is comprised of the said lamp module (310) and the power supply unit (not shown) which can convert the electricity supplied from outside as well. The said lamp module driver (321) can supply then electricity to the lamp module (310) with controlling the electricity supplied from the power supply unlit (not shown) or can be integrately manufactured with the power supply unit (not shown).

Meanwhile, in the present invention the said light control unit (320) can be manufactured as one set with the light (300) having the lamp module (310)

The said optical sensor (400) senses the illuminance of the image area of the camera installed and transmits the illuminant signal sensed to the main control unit (200). Herein, the said optical sensor (400) can be composed of the silicon photo cell or the CDS photo cell.

The said main control' unit (200) is connected to receive the video signal from the camera (11) and to receive the illuminant signal from the optical sensor (400) and controls turn-on and turn-off of the said light (300) according to the video signal or the illuminant signal. For this the said main control unit (200) is comprised of A/D converter unit (240), the local area communication module (220), the synchronous extraction unit (230), the sensitivity information acquisition unit (231) and the microcomputer (210).

The said A/D converter unit (240) converts the analog illuminant signal received from the optical sensor (400) to the digital data and thereto transmits the digital data to the microcomputer (210).

The said local area communication module (220), the configuration to communicate with the' local area communication module (322) of the light control unit (320), is composed of the module having the same communication method used in the local communication module (322) of the light control unit (320).

The said synchronous extraction unit (230) receives the video signal from the camera (11) and extracts the synchronous signal from the video signal to transmit to the microcomputer (210). Herein the extracted synchronous signal can be the vertical line sync signal (V-SYNC) and the microcomputer (210) described below generates the turn-on signal synchronized according to the shutter exposure time and delay time based on the vertical line sync signal. On the other hand, the said synchronous signal can be extracted from the movement signal of shutter, wherein the microcomputer (210) described below generates the turn-on signal in accordance with the movement signal of the shutter.

The said sensitivity information acquisition unit (231) acquires the image sensitivity from the video signal received from the said camera (11) and thereby it can be determined whether the shape and the color of the target are accurately captured or not.

Herein, the image sensitivity of the video signal becomes the basis on which it is determined whether the turn-on time according to the turn-on signal is matched or not with the open time of shutter' when the lamp module (310) is turned on according to the turn-on signal generated at the microcomputer (210) described below. That is, the light of the lamp module (310) which is turned on periodically, if both of the times are matched with each other, is transmitted to the imaging element of the camera (11) while the shutter is open. Otherwise, the light can not be transmitted to the imaging element in some interval even while the shutter is open.

Herein the said image sensitivity is measured by the image illuminance or the signal level. In other words, since the illuminance or the signal level is changed according to the quantity of the light transmitted to the imaging element of the camera, it can be sensed the change of the quantity of the light transmitted when the shutter is open. Since the said signal level represents the image signal level according to the quantity of the light or the scale of the image signal, it can be explained such as the voltage level by using the characteristics that the scale of the voltage is falling as the quantity of the light is getting less.

The said microcomputer (210) is comprising; the turn-on signal generating means (211) which generates, on the basis of the synchronous signal extracted by the said synchronous signal extraction unit (230), a turn-on signal in which pulses corresponding to the shutter exposure time of the imaging element of the camera are repeated using a shutter delay time as a gap, wherein the turn-on signal generated on initial driving time-shifts the pulse corresponding the shutter exposure time while the interval of the shift is increasing on every preset time interval; the synchronous determination unit (213) receives the image sensitivity from the said sensitivity information acquisition unit (231) while the lamp module turns on with the shift interval gradually increased, and detects the shift interval which gives the maximum image sensitivity on the basis of the change of the image sensitivity; the night or day determination means(212) which compares the illuminant signal transmitted from the said A/D converting unit (240) with the preset illuminant signal and determines whether the value of the illuminant signal transmitted exceeds the value of the preset illuminant signal or not.

Herein the said turn-on signal generation means (211), if the said synchronous signal extraction unit (130) is to extract vertical line sync signal (V-SYNC), is composed to set the exposure time based on the vertical line sync signal (V-SYNC) and to generate the turn-on signal in which the pulse (3) of the pre-fixed width is produced at the exposure time. On the other hand, the said turn-on signal generation means (211), if the said synchronous signal extraction unit (230) is to extract the shutter movement signal, is composed to generate the turn-on signal in which the pulse (3) is produced only in the exposure time of the shutter movement signal.

The said microcomputer (210) as configured above transmits the turn-on signal, which shifts the pulse on initial driving, to the light control unit (320) through the said local area communication module (220) and repeats the turn-on and turn-off according to the turn-on signal. Also, it detects the shift interval which gives the maximum image sensitivity by comparing the turn-on signals having the different shift interval, and thereafter transmits the turn-on signal having the extracted shift interval to the light control unit (320).

Herein, the said turn-on signal is a periodic signal in which the pulse uses the shutter delay time as a gap and is transmitted to the said light control unit (320) to turn on the lamp module (310) only in the pulse time. Moreover, although the pulse is shifted, substantially the same turn-on signal is transmitted to the light control unit (320) because the interval of pulse is kept as a shutter delay time.

Furthermore, the said microcomputer (210) keeps the turn-off by transmitting the turn-on signal, which has not the pulse corresponding to the shutter exposure time, through the said local area communication module when the determination result of the night or day determination unit (220) exceeds the value of the preset illuminance.

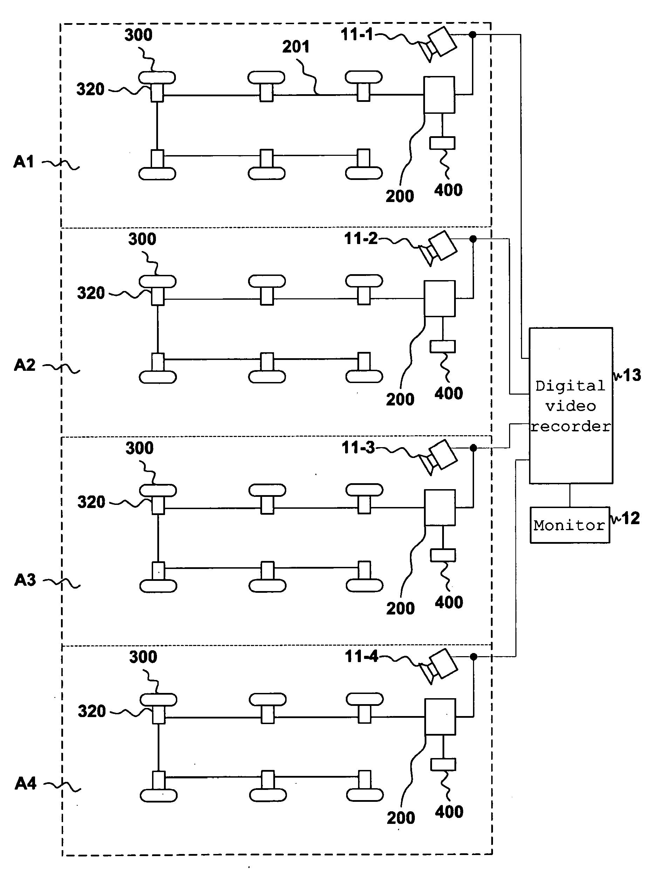

Fig. 5 is a drawing of the signal waveform to illustrate the turn-on signal (b) adjusted with the synchronous signal (a) and the turn-on signal before adjusted with the synchronous signal (a), in the exemplary embodiment of the present invention.

The said Fig. 5 (a) shows the waveform of the synchronous signal consisting of the shutter movement signal, and herein (1, 1') represents the shutter exposure duration when the shutter is open and (2, 2') represents the shutter delay time for converting to the electrical signal by scanning the imaging element when the shutter is closed. Herein one frame consists of Even field and Odd field, and Even filed and Odd field has the delay time (2, 2') after the exposure time (1, 1'). Therefore one frame has two exposure times (1, 1').

On the basis of such synchronous signal, the said microcomputer (210) generates the turn-on signal in which the periodic pulse has the width of exposure time (1, 1') using the said turn-on signal generating means (211) and transmit the turn-on signal generated to the light control unit to turn on the lamp module (310) only in the pulse duration.

Meanwhile, the said microcomputer checks the change of the image sensitivity received from the sensitivity information acquisition unit (231) by shifting the turn-on signal using time interval at the initial when it is started to control the turn-on the light (300) and calculates the shift interval which gives the maximum image sensitivity based on the shift of the turn-on signal and thereafter transmits the turn-on signal shifted to the extent of calculated shift interval:

For example, if the shutter exposure time is not matched with the turn-on time as shown in Fig. 2 (c) because of the signal transmitting process or the delay time of signal processing at internal element, the image sensitivity is getting deteriorated because of the decreased quantity of the light. So the said microcomputer (210) detects the interval such as Fig. 5(c) by shifting the turn-on signal using the time interval.

Meanwhile, the exposure duration or exposure time of the camera shutter can be changed by the shutter speed. In the present invention the main control unit (200) can be configured, to preset the interval of exposure time by fixing the sum of the exposure time and the delay time or to input with the input key (not shown) or to generates the turn-on signal according to the preset exposure time or the input exposure time, instead of comprising to the synchronous extraction unit (230). At this time, the turn-on time is matched with the open time of shutter by controlling the shifting interval of the turn-on signal in order to synchronize with the shutter speed in the said the sensitivity information acquisition unit (231).

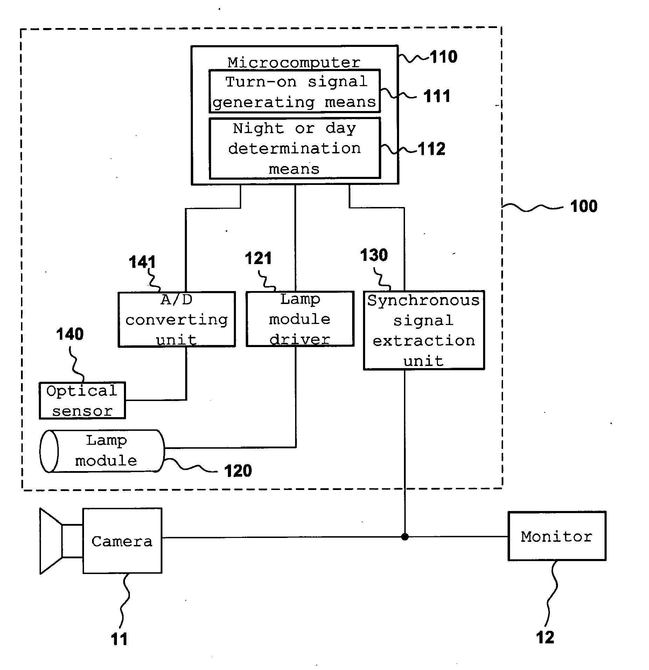

FIG. 6 is the example drawing of a lighting control system interlocked with the closed-circuit television camera according to the exemplary embodiment of the present invention installed on the four channel closed-circuit television system (10).

According to the said Fig 6, the closed-circuit television system (10) is comprising; the cameras (11:11-1, 11-2, 11-3, 11-4) installed respectively on the four image area (A:A1, A2, A3, A4); the digital video recorder (13) which receives the video signal captured through 4 channels at each camera (11:11-1, 11-2, 11-3, 11-4); the monitor which outputs the video signal through 4 channels transmitted from the digital video recorder (13).

And the plurality of the light (300) is installed in each image area (A: A1, A2, A3, A4).

In such as the exemplary embodiment of the present wherein the closed-circuit television system (10) is installed in connection with the light (300), the main control unit (2000 and the optical sensor (400) is installed respectively in each image area (A: A1, A2, A3, A4), and the light control unit (320) is installed on each light (300) and the main control unit is connected with the camera (11) for the same image area and the light control unit is set to local wire communicate with the main control unit for the same image area. In Fig. 6, the light control unit for the same image area is serially connected with the main control unit (200) using the signal wires (201) extended from the main control unit. However the present invention is not limited thereto and the main control unit (200) can be connected with the each light control unit using the independent signal wire or can communicate using local wireless communication.

Thereby, the turn-on of the light (300) in the image area (A: A1, A2, A3, A4) is separately controlled by the main control unit interlocked the camera.

## Claims

1. A lighting apparatus for a closed-circuit television camera **characterized by** comprising;
a lamp module (120) consisting of lamps;
a lamp module driver (121) which supplies power in a pulsed signal form to the lamp module (120);
a synchronous signal extraction unit (130) which senses the video signal output by a camera (11) to extract a synchronous signal; and
a microcomputer (110) which generates, on the basis of the synchronous signal extracted by the said synchronous signal extraction unit(130), a turn-on signal in which pulses corresponding to the shutter exposure time of the imaging element of the camera are repeated using a shutter delay time as a gap, and which drives the said lamp module driver (121) in accordance with the generated turn-on signal to turn on the said lamp module (120) in the pulse period corresponding to the shutter exposure time.

2. A lighting control method for a closed-circuit television camera **characterized by** comprising;
a synchronous signal extraction step (S10) to extract a synchronous signal from the video signal output by a camera (11);
a shutter exposure time obtaining step (S20) to obtain a shutter exposure time from the camera imaging element on the basis of the extracted synchronous signal;
a turn-on signal generating step (S30) to generate a turn-on signal in which pulses corresponding to the shutter exposure time are repeated using a shutter delay time as a gap;
LED turn on/off step (S40) to drive the lamp module driver (121) in accordance with the generated turn-on signal and to turn on the lamp module (120) in the pulse period corresponding to the shutter exposure time.

3. A lighting control system interlocked with the closed-circuit television camera, where the system is installed in connection with a closed-circuit television system (10) comprising camera (11) and monitor (12), controls the lamp module (310) of a plurality of lights (300) installed in the image area of the camera, and is **characterized by** comprising;
the light control unit (320), which is installed on each light (300), includes lamp module driver (321) to turn on the lamp module (310) in accordance with the turn-on signal transmitted from the main control unit (200); the local area communication module (322) to communicate with the main control unit (200);
the main control unit (200), which includes the synchronous signal extraction unit (230) to extract a synchronous signal from video signal transmitted from a camera (11), the local area communication module (220) to communicate with the local area communication module (322), and a microcomputer (210) which generates on the basis of the synchronous signal extracted a turn-on signal in which pulses corresponding to the shutter exposure time are repeated using a shutter delay time as a gap, and which transmits the generated turn-on signal to the said light control unit (320) to turn on the lamp module (310) in pulse period corresponding to the shutter exposure time.

4. A lighting control system interlocked with the closed-circuit television camera of claim 3, wherein the said main control unit (200) more includes the sensitivity information unit (231) acquiring the image sensitivity from the video signal and wherein the microcomputer (210) of the main control unit detects the turn-on signal which gives the maximum image sensitivity by comparing the image sensitivity acquired at the said sensitivity information unit (231) with time-shifting the pulse of the turn-on signal corresponding to the shutter exposure time on initial driving and thereafter use the turn-on signal detected as a turn-on signal.

5. A lighting control system interlocked with the closed-circuit television camera of claim 3, wherein the image sensitivity, which is acquired at the said sensitivity information unit (231), is measured by the illuminance.
